# EUROPEAN PATENT APPLICATION

(11) **EP 4 593 409 A1**
(43) Date of publication of application: **30.07.2025**
(21) Application number: 25151021.0
(22) Date of filing: 09.01.2025
(51) Int. Cl.: H04N 23/695, H04N 23/61

(54) **CONTROL DEVICE, CONTROL METHOD, AND PROGRAM, FOR CONTROLLING THE IMAGING DIRECTION OF A CAMERA**

(30) Priority: 29.01.2024 JP 2024011269
(71) Applicant: CANON KABUSHIKI KAISHA, Tokyo 146-8501 (JP)
(72) Inventor: MIYAMAE, Kyoko, Tokyo, 146-8501 (JP)
(74) Representative: Canon Europe Limited

(57) **Abstract**

A control device includes a control unit configured to execute a process for controlling an imaging direction such that a position of a subject in an image captured by an imaging device is kept at a target position, wherein the control unit does not change the imaging direction if the position of the subject is detected within a dead zone in the image, an acquisition unit configured to acquire a composition setting related to a second target position different from a first target position currently set to the target position, and a calculation unit configured to calculate a distance between the first and second target positions in the captured image, wherein, in a case where the acquisition unit acquires a change in the target position, the control unit changes a dead zone in accordance with the distance between the first target position and the second target position.

## Description

### BACKGROUND OF THE INVENTION

### Field of the Invention

The present invention relates to a control technique for an imaging device that tracks a subject.

### Description of the Related Art

There is known a technology by which a camera capable of controlling pan, tilt, and zoom, called a pan-tilt-zoom (PTZ) camera, detects a subject from a captured image and tracks the subject by controlling the pan, tilt, and zoom of the PTZ camera. This tracking technology makes it possible to automatically control the pan, tilt, and zoom (hereinafter, referred to as PTZ) of a camera such that the subject is kept in a preset size and at a preset position (hereinafter, referred to as a target position) in the captured image.

Japanese Patent No. 4,189,534 discusses a technique in which the imaging direction of a camera is not moved when it is determined that a subject that is being tracked (hereinafter, referred to as tracking subject) is within a dead zone, and the imaging direction of the camera is moved in a direction to track the subject when it is determined that the subject is outside the dead zone.

However, in Japanese Patent No. 4,189,534, even though the target position is changed, the change in the imaging direction is stopped even before the tracking subject reaches the target position in a case where it is determined that the tracking subject is within the dead zone or in a case where the tracking subject enters the dead zone.

### SUMMARY OF THE INVENTION

Thus, the present invention is directed to providing a captured image intended by a user.

According to a first aspect of the present invention, there is provided a control device as specified in claims 1 to 9. According to a second aspect of the present invention, there is provided a control device as specified in claim 10. According to a third aspect of the present invention, there is provided a control device as specified in claim 10.

Further features of the present invention will become apparent from the following description of embodiments with reference to the attached drawings.

### BRIEF DESCRIPTION OF THE DRAWINGS

Fig. 1 is a diagram illustrating a system configuration according to a first embodiment.
Fig. 2 is a functional block diagram of a pan-tilt-zoom (PTZ) camera according to the first embodiment.
Fig. 3 is a hardware configuration diagram of the PTZ camera and a client device according to the first embodiment.
Figs. 4A to 4C are diagrams illustrating calculation of a distance in a case where a target position is changed according to the first embodiment.
Figs. 5A to 5C are diagrams illustrating settings of a target position and a dead zone according to the first embodiment.
Fig. 6 is a flowchart illustrating automatic tracking control according to the first embodiment.
Fig. 7 is a flowchart illustrating automatic tracking control according to the second embodiment.
Fig. 8 is a flowchart illustrating automatic tracking control according to the third embodiment.

### DESCRIPTION OF THE EMBODIMENTS

Hereinafter, embodiments will be described in detail with reference to the accompanying drawings. The following embodiments do not limit the invention according to the claims. Although the embodiments include a plurality of features, not all of these features are essential to the invention, and the plurality of features may be combined in any manner. Furthermore, in the accompanying drawings, the same or similar components are given the same reference numbers, and duplicated descriptions will be omitted.

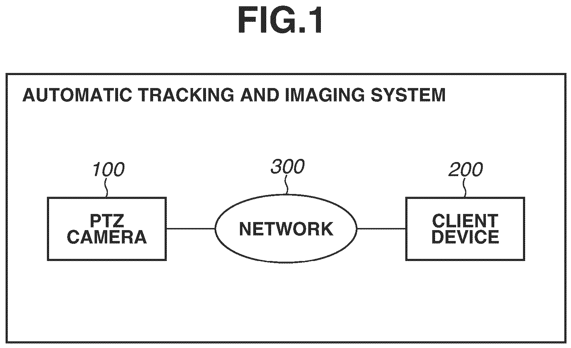

A first embodiment of the present invention will be described below. Fig. 1 is a configuration diagram of an imaging system according to the first embodiment. An imaging system in the present embodiment includes a pan-tilt-zoom (PTZ) camera 100, a client device 200, and a network 300. The PTZ camera 100 and the client device 200 are connected via the network 300, but the method of connection between the devices is not limited to a specific method. For example, the devices may be connected using a serial digital interface (SDI) connector or a high-definition multimedia interface (HDMI) (registered trademark) connector.

The client device 200 controls the imaging direction, the angle of view, image quality control, and/or the registration and reproduction of composition settings by transmitting control commands to the PTZ camera 100. The composition settings here refer to settings related to the position and size of a subject in a captured image. Various positions of a driving unit 107, described below, can be registered as preset positions by being associated with predetermined numbers (preset numbers). Entering preset numbers allows the driving unit 107 to drive to the respective positions registered in association with the preset numbers, so that the preset positions can be reproduced. The preset numbers can also be associated with settings related to imaging, such as image quality and white balance.

The PTZ camera 100 transmits a response to the control command acquired from the client device 200, to the client device 200. The PTZ camera 100 further changes the imaging range of the PTZ camera 100 so as to track the subject detected by a detection unit 102 (described below) based on the composition settings acquired from the client device 200. The position of the subject in the captured image with these composition settings will be described below as a target position. The PTZ camera 100 is controlled to keep the subject at the target position in the captured image. The imaging direction of the PTZ camera is not moved when it is determined that the position of the subject that is being tracked is within a dead zone, and the imaging direction of the camera is moved in a direction to track the subject when it is determined that the subject is outside the dead zone. In this control system, the client device 200 transmits a control command to the PTZ camera 100 including the driving unit 107 that drives in the horizontal and vertical directions, thus changing the imaging range, but the present invention is not limited to this configuration. For example, in another embodiment, a camera without a driving unit is connected to an external device such as a pan head including the driving unit 107, so that the imaging direction of the camera is changed. Yet alternatively, a control device is connected to a removable interchangeable lens so that the imaging range (zoom ratio) is changed.

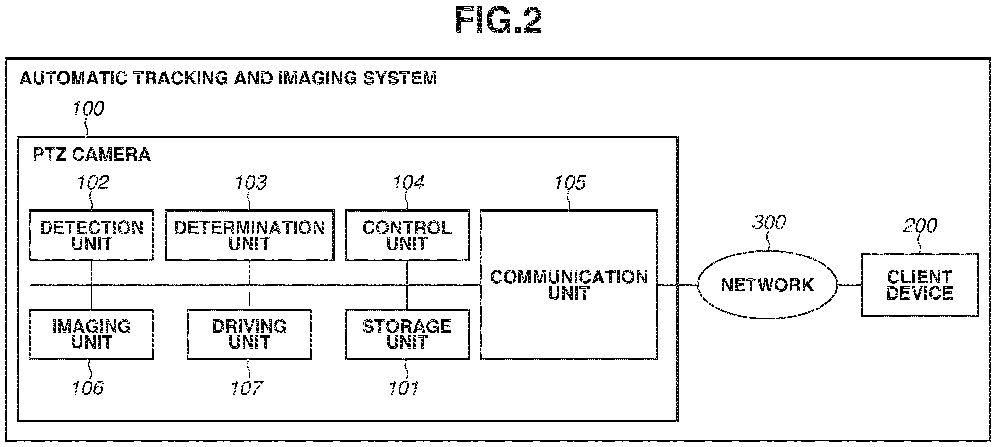

Next, a functional configuration example of the control device according to the present embodiment will be described with reference to Fig. 2. Fig. 2 is a block diagram illustrating the functional configuration of the PTZ camera 100 according to the present embodiment.

Some of the functional blocks illustrated in Fig. 2 are implemented by causing a central processing unit (CPU) or the like serving as a computer (not illustrated) included in an automatic imaging system to execute computer programs stored in a memory serving as a storage medium (not illustrated).

However, some or all of these functional blocks may be implemented by hardware components. The hardware may be a dedicated circuit (application specific integrated circuit (ASIC)), a processor (a reconfigurable processor or a digital signal processor [DSP]), or the like.

The functional blocks illustrated in Fig. 2 do not necessarily have to be housed in the same housing, and may be configured by separate devices connected to one another via signal paths.

The PTZ camera 100 includes a storage unit 101, the detection unit 102, a determination unit 103, the control unit 104, a communication unit 105, the imaging unit 106, the driving unit 107, and an internal bus that enables intercommunication.

The storage unit 101 outputs the composition settings received from the communication unit 105 to the detection unit 102, the determination unit 103, and the control unit 104. Position information about the subject acquired from the detection unit 102 is output to the determination unit 103 and the control unit 104. Furthermore, in the present embodiment, the composition settings include at least information about the subject serving as the tracking target and composition information. The composition settings may also include other pieces of information such as loss determination criteria for determining the loss of the subject serving as the tracking target.

The detection unit 102 detects the tracking target by analyzing a video image input from the imaging unit 106 based on the composition settings input from the storage unit 101, and stores detection information in the storage unit 101. The detection unit 102 detects the position (center point) of the subject serving as the tracking target in the captured image through processing of detecting an object from the captured image using a trained model. Then, the detection unit 102 stores the result in the storage unit 101 as position information about the subject. The subject position is information expressed in pixels [PIX] with the resolution of the captured image as a unit. In the present embodiment, the detection result is the position information about the tracking target in the screen. Alternatively, the detection result may include other pieces of information such as size information and detection accuracy.

In response to acquisition of a new composition setting (target position) from the storage unit 101, the determination unit (calculation means) 103 calculates the distance in the captured image between the acquired target position (second target position) and the immediately preceding target position (first target position), and determines whether the distance is equal to or less than a predetermined threshold. The determination unit 103 also transmits a determination result to the control unit 104. At this time, the predetermined threshold may be changed depending on the zoom value. In that case, the zoom value (zoom ratio) of the captured image is further acquired from the storage unit 101. For example, in a case where the zoom value of the PTZ camera 100 changes between 0 and 100, the predetermined threshold in a case where the zoom value is 0 is set larger than the predetermined threshold in a case where the zoom value is 100. In this manner, in a case where the composition setting is set such that the subject appears large in the captured image, the user can change the composition settings in detail.

The control unit 104 controls the imaging unit 106 and the driving unit 107 based on the result of the determination made by the determination unit 103 and the composition settings and the subject position information acquired from the storage unit 101, thus changing the imaging range.

The communication unit 105 communicates with an external device such as the client device 200 via the network 300. The communication unit 105 outputs information about an image captured by the imaging unit 106 described below to the client device 200, and outputs information input from the client device to the storage unit 101.

The imaging unit 106 changes the imaging range based on the control command acquired from the control unit 104. The imaging unit 106 also outputs information such as a zoom value to the storage unit 101.

The driving unit 107 changes the imaging range based on the control command acquired from the control unit 104. The driving unit 107 also outputs the current pan and tilt driving positions to the storage unit 101.

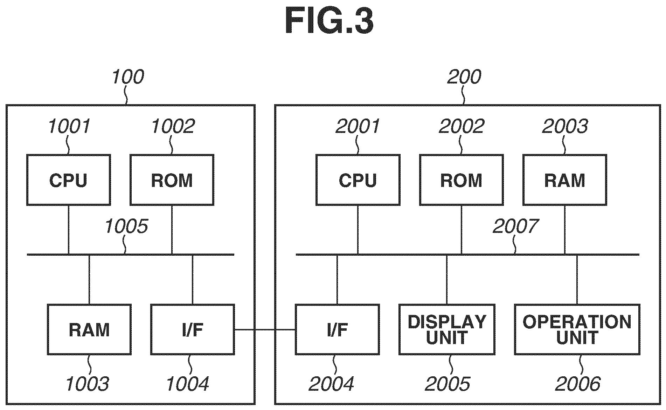

Next, a hardware configuration of the PTZ camera 100 in the present embodiment will be described with reference to Fig. 3. The PTZ camera 100 in the present embodiment has a CPU 1001, a read only memory (ROM) 1002, a random access memory (RAM) 1003, a network interface (I/F) 1004, and an internal bus 1005 that enables intercommunication.

The CPU 1001 controls the entire device by controlling each component of the PTZ camera 100. The CPU 1001 is equivalent to the control unit 104, the detection unit 102, and the determination unit 103 illustrated in Fig. 2.

The ROM 1002 is used as a permanent storage area for an operating system (OS), various programs, and various types of data, and is also used as a short-term storage area for various types of data. The ROM 1002 functions as a part of the control unit 104 in Fig. 2.

The RAM 1003 is a volatile high-speed storage device such as a dynamic RAM (DRAM), into which the OS, various programs, and various types of data are loaded, and is also used as a work area for the OS and various programs. The RAM 1003 is equivalent to the storage unit 101 illustrated in Fig. 2.

The network I/F 1004 is an interface for connection to the above-described the network300, and is responsible for communication with external devices such as the client device 200 and the pan head via a communication medium such as Ethernet. The network I/F 1004 is equivalent to the communication unit 105 in Fig. 2.

Next, a hardware configuration of the client device 200 in the present embodiment will be described with reference to Fig. 3. The client device 200 in the present embodiment has a CPU 2001, a ROM 2002, a RAM 2003, a network I/F 2004, a display unit 2005, an operation unit 2006, and an internal bus 2007 that enables intercommunication.

The CPU 2001 controls the entire device by controlling each component of the client device 200. In the present embodiment, the CPU 2001 analyzes an operation command related to the composition settings of the operation unit 2006 described below, and outputs a control command to the PTZ camera 100 via the network I/F 2004.

The ROM 2002 is used as a permanent storage area for the OS, various programs, and various types of data, and is also used as a short-term storage area for various types of data.

The RAM 2003 is a volatile high-speed storage device typified by a DRAM or the like, into which the OS, various programs, and various types of data are loaded, and is also used as a work area for the OS and various programs. In the present embodiment, the RAM 2003 stores operation information input to the operation unit 2006 described below.

The network I/F 2004 is an interface for connection to the above-described network 300, and is responsible for communication with external devices such as the PTZ camera 100 via a communication medium such as Ethernet.

The display unit 2005 is a display such as a liquid crystal display (LCD) for displaying captured images acquired from the PTZ camera 100, various settings, and various types of information.

The operation unit 2006 is a mouse, a keyboard, and/or the like for receiving operations from the user and outputting the received results to the CPU 2001. In the present embodiment, the operation unit 2006 receives composition change settings from the user and produces output to the CPU 2001 and the RAM 2003.

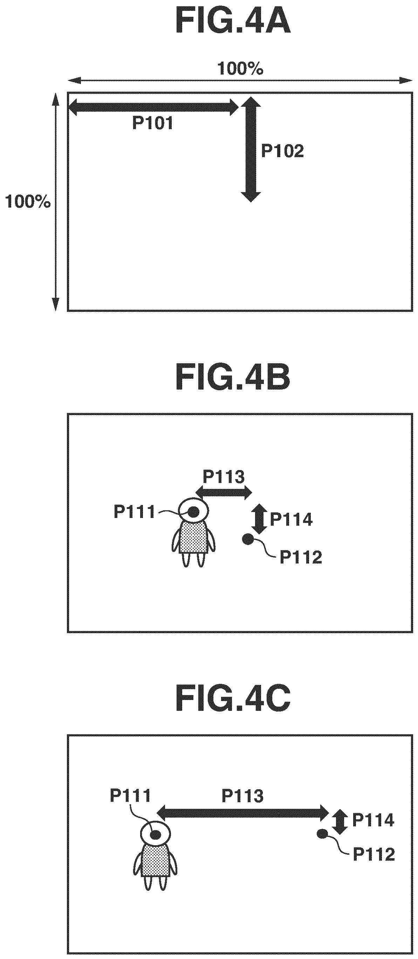

Next, automatic tracking control in a case where the present embodiment is applied to automatic tracking and imaging with a person as the tracking target will be described with reference to Figs. 4A to 4C, 5A to 5C, and 6.

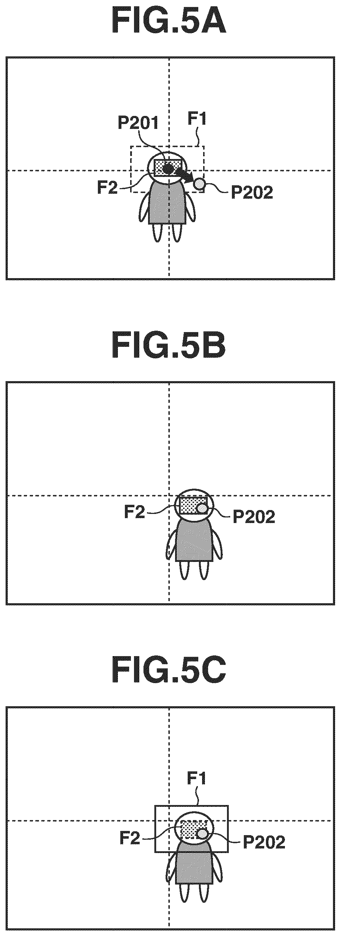

In the present embodiment, in a case where a user issues an instruction to change the composition setting (target position) during tracking, if the amount of change in the target position is equal to or less than a threshold, the dead zone setting is changed to a dead zone (second range) narrower than the currently set dead zone (first range). The amount of change in the target position here refers to a distance (px) in the captured image between the first target position and the second target position. After that, when the subject is detected as being located within the second range in the captured image, the dead zone setting is returned to the first range. The dead zone here refers to an area set in a predetermined range centered around the target position of the subject. In the present embodiment, the subject position is set to the center point of the subject's face, but is not limited to this. For example, the center of gravity of the subject's body may be set to the subject position. In the captured image, if the subject detected by the detection unit 102 is located within the area of the dead zone, the control unit 104 does not change the imaging range. In the present embodiment, the dead zone is a predetermined range centered around the subject position, but is not limited to this. For example, a similar effect can be produced even if the predetermined range is centered around the target position. The determination process by the determination unit 103 will be described with reference to Figs. 4A to 4C, and the PTZ control determination will be described with reference to Figs. 5A to 5C.

Fig. 4A illustrates thresholds P101 and P102 that are respective thresholds for the pan direction and the tilt direction, which are to be used by the determination unit 103 in changing the target position. In the present embodiment, each threshold is set to 50% of the width of the captured image. If both the pan and the tilt fall below the thresholds, the determination unit 103 determines that the amount of change in the target position is equal to or less than the predetermined thresholds, but the determination method is not limited to this. For example, the determination unit 103 may make the determination based on other information such as the PTZ speed at the time of composition change, the subject speed, and the PTZ speed calculated for the composition change. Figs. 4B and 4C illustrate a position P111 that represents the subject position and a target position (first target position) before change of the target position, and a position P112 that represents a target position (second target position) to which the user changes the target position. Figs. 4B and 4C also illustrate an amount of change P113 in the target position in the pan direction in accordance with the setting change, and an amount of change P114 in the target position in the tilt direction in accordance with the setting change. Referring to Fig. 4B, since the amounts of change P113 and P114 both fall below the set thresholds, the determination unit 103 determines that the amount of change in the target position is equal to or less than the predetermined thresholds. Referring to Fig. 4C, the amount of change P114 falls below the threshold, but the amount of change P113 is equal to or greater than the threshold. Therefore, the determination unit 103 determines that the amount of change in the target position is greater than the predetermined thresholds.

Figs. 5A to 5C illustrate a position P201 representing a subject position and a target position (first target position) before change of the target position, and a position P202 representing a target position (second target position) to which the user changes the target position. A dead zone F1 is a dead zone (first range) set in advance, and a dead zone F2 is a dead zone (second range) in a case where it is determined that the amount of change in the target position is equal to or less than a predetermined threshold. In Fig. 5A, since the amount of change in the target position falls below the predetermined threshold in both the pan/tilt directions, it is determined that the amount of change in the target position is equal to or less than the predetermined threshold. At this time, the control unit 104 changes the dead zone to be used for control from the first range F1 to the second range F2. In Fig. 5A, since the second target position P202 falls outside the range of the dead zone due to the change made to the dead zone, the control unit 104 calculates the pan/tilt direction and the driving speed such that the target position is included in the range of the dead zone. In the present embodiment, the PTZ directions and speeds are calculated according to the difference between the subject position and the target position, and the control unit 104 changes the imaging range by transmitting control commands to the imaging unit 106 and the driving unit 107. Furthermore, if the target position is included in the range of the dead zone, the control unit 104 does not change the imaging range (stops the PTZ control). For example, during the PTZ control, if the second target position P202 is included in the second range as illustrated in Fig. 5B, the control unit 104 determines that the target position is included in the range of the dead zone, and stops the PTZ control. At this time, the control unit 104 changes the dead zone setting from the dead zone F2 (second range) to the dead zone F1 (first range) (Fig. 5C).

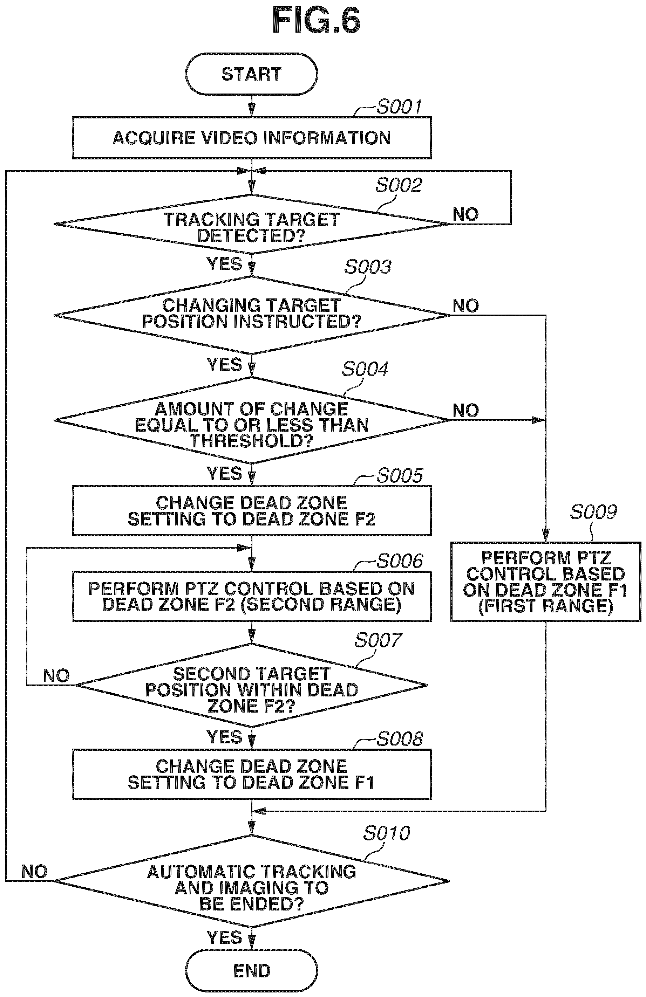

The automatic tracking control in a case where the present embodiment is applied to automatic tracking and imaging of a person serving as the tracking target will be described with reference to the flowchart in Fig. 6. The processing in the flowchart in Fig. 6 is implemented by the CPU 1001 loading the OS, various programs, and various types of data into a RAM (storage device) that temporarily stores computer programs to be executed by the CPU 1001, and executing the programs and the data. The processing in the flowchart is started by acquiring a captured image from the PTZ camera 100, and is executed repeatedly until reception of a command to end the automatic tracking from the user.

In step S001, the detection unit 102 acquires video information (captured image) from the imaging unit 106. After acquisition of a captured image, the processing proceeds to step S002.

In step S002, the detection unit 102 detects the subject serving as the tracking target from the captured image. If the tracking target has been detected (YES in step S002), the detection unit 102 outputs position information to the storage unit 101. After outputting the position information about the subject, the processing proceeds to step S003. If the tracking target has not been detected (NO in step S002), the operation in step S002 is repeated until the tracking target is detected from the video information (captured image).

In step S003, the determination unit 103 acquires the composition setting (target position) from the storage unit 101. Further, the determination unit 103 compares the acquired composition setting (target position) with the currently set composition setting (target position). If the target position has been changed (YES in step S003), the processing proceeds to step S004. If the target position has not been changed (NO in step S003), the processing proceeds to step S009. At this time, if there is no currently set target position, the initial information stored in advance in the PTZ camera 100 or the center point in the captured image is set to the target position.

In step S004, the determination unit 103 calculates the amount of change in the target position from the acquired target position (second target position) and the currently set target position (first target position), and determines whether the amount of change is equal to or less than a preset threshold. If true (YES in step S004), the processing proceeds to step S005. If false (NO in step S004), the processing proceeds to S009.

In step S005, the control unit 104 changes the currently set dead zone F1 (first range) to the dead zone F2 (second range) that is narrower than the first range F 1. After the dead zone setting is changed, the processing proceeds to step S006.

In step S006, the control unit 104 calculates PTZ control information for the imaging unit 106 and the driving unit 107, based on the dead zone F2 (second range) narrower than the first range F1. Based on the PTZ control information, the control unit 104 outputs control commands to the imaging unit 106 and the driving unit 107 to perform PTZ control. The imaging unit 106 and the driving unit 107 change the imaging range based on the acquired control commands. After the control unit 104 outputs the control commands to the imaging unit 106 and the driving unit 107, the processing proceeds to step S007.

In step S007, the control unit 104 determines whether the target position (second target position) is located within the dead zone F2 (second range). If the target position is located within the dead zone F2 (second range) (YES in step S007), the processing proceeds to step S008. If the target position is not located within the dead zone F2 (second range) (NO in step S007), the processing proceeds to step S006.

In step S008, the control unit 104 changes the dead zone setting to the dead zone F1 (first range). After change of the dead zone setting to the dead zone F1 (first range), the processing proceeds to step S010.

In step S009, the control unit 104 calculates PTZ control information for the imaging unit 106 and the driving unit 107 based on the dead zone F1 (first range). Based on the PTZ control information, the control unit 104 outputs control commands to the imaging unit 106 and the driving unit 107 to perform PTZ control. The imaging unit 106 and the driving unit 107 change the imaging range based on the acquired control commands. After the control unit 104 outputs the control commands to the imaging unit 106 and the driving unit 107, the processing proceeds to step S010.

In step S010, if no command to stop the automatic tracking and imaging has been received from the client device 200 (NO in step S010), the processing proceeds to step S001. If a command to stop the automatic tracking and imaging has been received (YES in step S010), the processing is ended.

As described above, changing the range of the dead zone in a case where the target position has been changed makes it possible to provide a captured image with the composition desired by the user even if the user wishes to fine-tune the composition.

A second embodiment of the present invention will be described below. In the first embodiment, in a case where the target position has been changed during tracking, with the amount of change in the target position equal to or less than a threshold, PTZ control is performed based on the dead zone (second range) narrower than the predetermined dead zone (first range).

In the present embodiment, in a case where the target position has been changed during tracking, in addition to the operation in the first embodiment, PTZ control is performed such that the PTZ driving speed is slower than the PTZ driving speed (first speed) with the dead zone set to the first range, in order to prevent PT disturbances due to narrowing of the dead zone. After that, in response to the position of the subject being included in the dead zone F2 (second range), the PTZ control is stopped, the dead zone is returned to the dead zone F1 (first range), and the PTZ driving speed is returned to the first speed. In a case where the position of the subject is included in the dead zone F2, the dead zone setting is changed from the dead zone F2 to the dead zone F1, but this is not restrictive. Other conditions may be used. For example, the dead zone setting may be changed to the dead zone F 1 in a case where a certain time has passed after setting the dead zone F2.

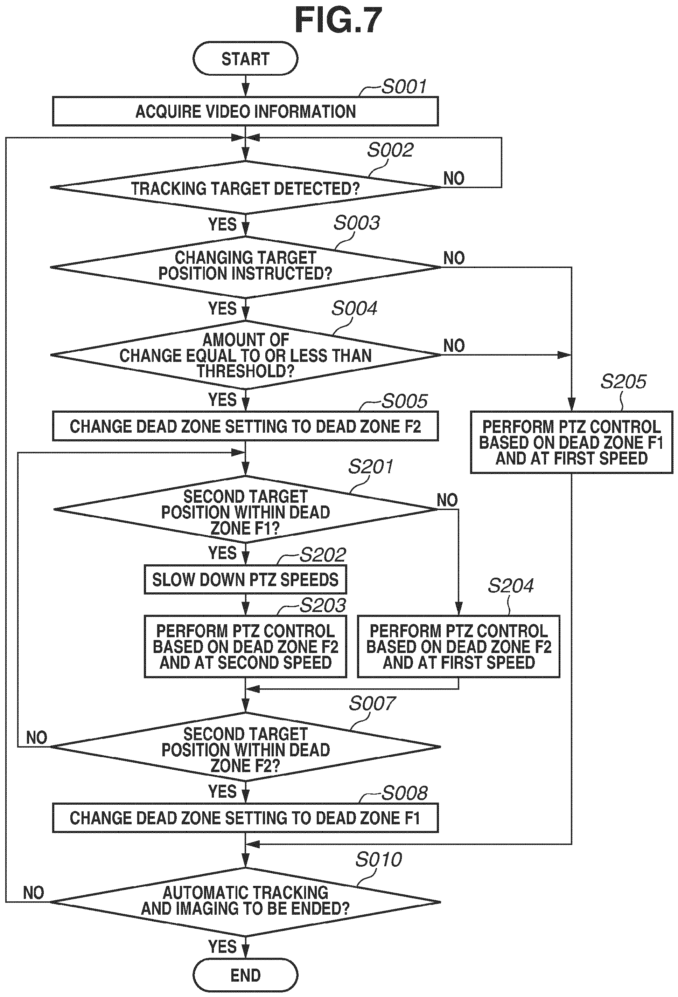

The automatic tracking control in a case where the present embodiment is applied to automatic tracking and imaging of a person serving as a tracking target will be described with reference to the flowchart of Fig. 7. The processing in the flowchart of Fig. 7 is implemented by the CPU 1001 loading the OS, various programs, and various types of data into a RAM (storage device) that temporarily stores computer programs to be executed by the CPU 1001 and executing the programs and the data. The processing in the flowchart is started in response to acquisition of a captured image from the PTZ camera 100, and is repeatedly executed until a command to end the automatic tracking is received from the user. The operations in steps S001 to S010 are similar to those in the first embodiment, and thus description thereof will be omitted.

In step S201, the control unit 104 determines whether the target position (second target position) is located within the dead zone F1 (first range). If the target position (second target position) is located within the dead zone F1 (first range) (YES in step S201), the processing proceeds to step S202. If the target position (second target position) is not located within the dead zone F1 (first range) (NO in step S201), the processing proceeds to step S204.

In step S202, the control unit 104 sets a setting speed for driving the imaging unit 106 and the driving unit 107 to a second speed that is slower (lower) than the setting speed (first speed) with the dead zone setting set to the dead zone F1. After change of the set speed, the processing proceeds to step S203.

In step S203, the control unit 104 calculates PTZ control information for the imaging unit 106 and the driving unit 107 based on the dead zone F2 and the second speed. After calculation of the PTZ control information, the processing proceeds to step S007.

In step S204, the control unit 104 calculates PTZ control information for the imaging unit 106 and the driving unit 107 based on the dead zone F2 and the first speed. After calculation of the PTZ control information, the processing proceeds to step S007.

In step S205, the control unit 104 calculates PTZ control information for the imaging unit 106 and the driving unit 107 based on the dead zone F 1 and the first speed. After calculation of the PTZ control information, the processing proceeds to step S010.

As described above, in a case where the target position has been, changing the range of the dead zone makes it possible to provide a captured image with the composition desired by the user even if the user desires to fine-tune the composition. Furthermore, when the dead zone is narrowed, slowing down the PTZ control speed makes it possible to provide a captured image with controlled PT disturbances caused by the reduced dead zone.

A third embodiment of the present invention will be described below. In the first embodiment, in a case where the target position is changed during tracking, with the amount of change in the target position equal to or less than a threshold, PTZ control is performed based on a dead zone (second range) narrower than a predetermined dead zone (first range).

In the present embodiment, in a case where a target position has been changed during tracking, the dead zone setting is changed based on the amount of change in the target position and the current PTZ driving speed. This makes it possible to automatically track the subject so as to keep the subject at the target position desired by the user when the driving speed to be used for PTZ control is variable or when the driving speed set by the user is to be used. More specifically, in a case where the amount of change in the target position is equal to or less than a threshold and the current PTZ driving speed is equal to or less than a threshold, the dead zone setting is set to off. Furthermore, PTZ control is performed to match the position of the subject that is detected by a detection unit 102 and the target position set by the user. This makes it possible to provide a captured image with the composition intended by the user while controlling PT video image distortion caused by the dead zone setting being disabled.

In the present embodiment, if the amount of change in the target position is equal to or less than the threshold and all the PTZ speeds are slower than the threshold, the dead zone setting is set to off, and PTZ control is performed such to match the subject position with the target position. Similarly, if the amount of change in the target position is equal to or less than the threshold and at least one of the PTZ speeds is faster than the corresponding threshold, and PTZ control is performed with the dead zone set to the dead zone F2, as in the first embodiment. After that, when the subject position matches the target position or is included in the dead zone F2, the PTZ control is stopped, and the dead zone setting is set to the dead zone F1. In the present embodiment, in a case where the subject position matches the target position or is included in the dead zone F2, the dead zone setting is changed to the dead zone F1. However, this is not restrictive, and other conditions may be used. For example, the dead zone setting is changed to the dead zone F 1 when a certain time has passed after the setting of the dead zone setting to off or to the dead zone F2.

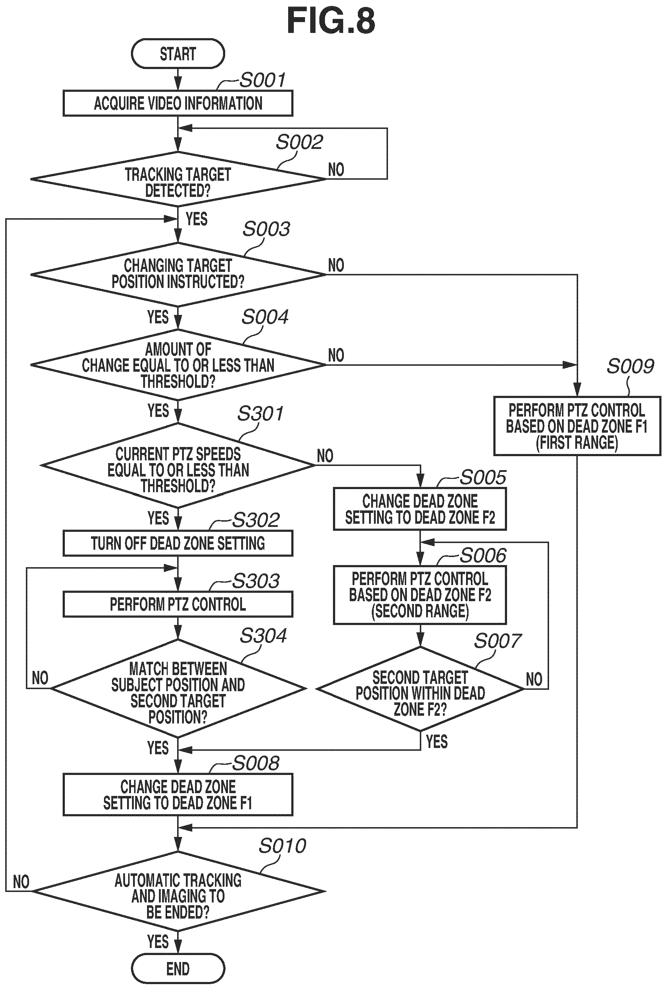

The automatic tracking control in a case where the present embodiment is applied to automatic tracking and imaging of a person serving as a tracking target will be described with reference to the flowchart in Fig. 8. The processing in the flowchart of Fig. 8 is implemented by a CPU 1001 loading an OS, various programs, and various types of data into a RAM (storage device) that temporarily stores computer programs to be executed by the CPU 1001 and executing the program and the data. The processing in the flowchart is started in response to acquisition of a captured image from a PTZ camera 100, and is repeatedly executed until a command to end the automatic tracking is received from the user. The operations in steps S001 to S010 are similar to those in the first embodiment, and thus description thereof will be omitted.

In step S301, a control unit 104 acquires the current PTZ speeds from a storage unit 101 and determines whether each speed is equal to or less than a preset threshold. If each of the PTZ speeds is equal to or less than the respective threshold (YES in step S301), the processing proceeds to step S302. If at least one of the PTZ speeds is greater than the respective threshold (NO in step S301), the processing proceeds to step S005.

In step S302, the control unit 104 calculates PTZ control information for an imaging unit 106 and a driving unit 107 such that the subject position detected by the detection unit 102 matches the target position. After calculation of the PTZ control information, the processing proceeds to step S303. In the present embodiment, the dead zone setting is turned off, but the present invention is not limited to this. For example, the dead zone may be set to match the subject position.

In step S303, the control unit 104 performs PTZ control by outputting control commands to the imaging unit 106 and the driving unit 107 based on the PTZ control information calculated in step S302. The imaging unit 106 and the driving unit 107 change the imaging range based on the acquired control commands. After the control unit 104 outputs the control commands to the imaging unit 106 and the driving unit 107, the processing proceeds to step S304.

In step S304, the control unit 104 determines whether the subject position detected by the detection unit 102 matches the target position. If it is determined that there is the match (YES in step S304), the processing proceeds to step S008. If it is determined that there is no match (NO in step S304), the processing proceeds to step S303. Here, the processing proceeds to step S008 in a case where the subject position and the target position match, but this is not restrictive. For example, it may be determined that the target position and the subject position match if the target position and the subject position match for a predetermined number of seconds or a predetermined number of times. It may be determined that the target position and the subject position match if a predetermined period of time has passed after the PTZ control.

As described above, in the present embodiment, if the amount of change in the target position is equal to or less than a threshold and the PTZ speeds are equal to or less than a threshold, PTZ control is performed such that the target position and the subject position match. This makes it possible to automatically track the subject so as to keep the subject at the target position desired by the user in a case where the driving speed used for PTZ control is variable or in a case where the driving speed set by the user is used.

In the first to third embodiments, the PTZ camera 100 and the driving unit 107 are integrated, but the configuration is not limited to this. If the PTZ camera 100 and the driving unit 107 are separate units, the client device 200 transmits a control instruction to an external device such as a pan head having the driving unit 107. Alternatively, the client device 200 issues a control instruction to an external device such as a pan head having the driving unit 107 via the PTZ camera 100, so that the driving unit 107 can be driven to remotely control the imaging direction of the camera 100.

While embodiments of the present invention have been described above, the present invention is not limited to these embodiments, and various modifications and alterations are possible within the scope of the gist of the present invention.

According to the present invention, it is possible to provide a captured image intended by the user.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments but is defined by the scope of the following claims.

## Claims

1. A control device, comprising:
a control means configured to execute a process to control an imaging direction of an imaging device (100) such that a position of a subject in an image captured by the imaging device is kept at a target position, wherein the control means does not change the imaging direction if the position of the subject is detected within a dead zone in the image;
an acquisition means configured to acquire a composition setting related to a second target position that is different from a first target position currently set to the target position; and
a calculation means (103) configured to calculate a distance between the first target position and the second target position in the captured image,
wherein the control means is configured to, in a case where the acquisition means acquires a change in the target position, change a dead zone in accordance with the distance between the first target position and the second target position.

2. The control device according to claim 1,
wherein, in a case where the distance calculated by the calculation means is greater than a predetermined threshold, the control means changes the imaging direction such that the second target position is kept within a first dead zone in the captured image,
wherein, in a case where the distance calculated by the calculation means is equal to or less than the predetermined threshold, the control means changes the imaging direction such that the second target position is kept within a second dead zone,
wherein the first dead zone and the second dead zone are ranges centered around the target position of the subject, and
wherein the first dead zone is smaller than the second dead zone.

3. The control device according to claim 2,
wherein the distance between the first target position and the second target position indicates, respectively, a distance in a pan direction and a distance in a tilt direction in the captured image, and
wherein the calculation means includes a determination means for determining that the distance calculated by the calculation means is greater than the predetermined threshold in a case where at least one of the distance in the pan direction and the distance in the tilt direction is greater than the predetermined threshold, and determine that the distance calculated by the calculation means is equal to or less than the predetermined threshold in a case where both the distance in the pan direction and the distance in the tilt direction are equal to or less than the predetermined threshold.

4. The control device according to claim 3, wherein, when the control means determines that the second target position is included in the second dead zone, the control means changes the imaging direction such that the second target position is kept within the first dead zone.

5. The control device according to claim 4,
wherein, in a case where it is determined that the distance calculated by the calculation means is greater than the predetermined threshold, the control means controls the imaging direction at a first speed such that the second target position is kept within the first dead zone,
wherein, in a case where it is determined that the distance calculated by the calculation means is equal to or less than the predetermined threshold, the control means controls the imaging direction at a second speed such that the second target position is kept within the second dead zone, and
wherein the second speed is lower than the first speed.

6. The control device according to claim 4,
wherein, in a case where it is determined that the distance calculated by the calculation means is greater than the predetermined threshold, the control means changes the imaging direction at a first speed such that the second target position is kept within the first dead zone,
wherein, in a case where it is determined that the distance calculated by the calculation means is equal to or less than the predetermined threshold and the second target position is not included in the first dead zone, the control means changes the imaging direction at the first speed such that the second target position is kept within the second dead zone, and
wherein, in a case where it is determined that the distance calculated by the calculation means is equal to or less than the predetermined threshold and the second target position is included in the first dead zone, the control means changes the imaging direction at a second speed such that the second target position is kept within the second dead zone.

7. The control device according to claim 3, wherein, in a case where the distance calculated by the calculation means is equal to or less than the predetermined threshold and a control speed for the imaging direction is equal to or less than a predetermined threshold, the control means controls the imaging direction such that the position of the subject matches the second target position.

8. The control device according to claim 7,
wherein the control speed for the imaging direction indicates a control speed for each of pan and tilt of the imaging device,
wherein the control means determines that the control speed is greater than the predetermined threshold in a case where the control speed for at least one of the pan and tilt of the imaging device is greater than the predetermined threshold, and
wherein the control means determines that the control speed is equal to or less than the predetermined threshold in a case where all the control speeds for the pan and tilt of the imaging device are equal to or less than the predetermined threshold.

9. The control device according to claim 8, wherein, when the control means determines that the position of the subject matches the second target position, the control means changes the imaging direction such that the second target position is kept within the first dead zone.

10. A control method for a control device, the control method comprising:
performing control to execute a process for controlling an imaging direction such that a position of a subject in the image captured by an imaging device is kept at a target position, wherein the imaging direction is not changed if the position of the subject is detected within a dead zone in the image;
acquiring a composition setting related to a second target position that is different from a first target position set in advance to the target position; and
calculating a distance between the first target position and the second target position in the captured image,
wherein, in a case where a change in the target position is acquired in the acquiring, in the controlling, a dead zone is changed in accordance with the distance between the first target position and the second target position.

11. A program for causing a computer to perform the control method according to claim 10.
